(19) Europäisches Patentamt / European Patent Office / Office européen des brevets

(11) **EP 2 152 030 B1**

(12) **EUROPEAN PATENT SPECIFICATION**

(45) Date of publication and mention of the grant of the patent:
**03.04.2013 Bulletin 2013/14**

(51) Int Cl.:
*H04W 4/06* *(2009.01)*          *H04W 72/00* *(2009.01)*
*H04W 36/08* *(2009.01)*          *H04W 4/12* *(2009.01)*

(21) Application number: **08380243.9**

(22) Date of filing: **04.08.2008**

(54) **MBMS handover triggering depending on the soft combining possibility**

MBMS Handover Auslösung abhängig von der Softkombinierungsmöglichkeit

Déclenchement d'un changement de cellule pour un service MBMS en fonction des possibilités de combinaison de signaux

(84) Designated Contracting States:
AT BE BG CH CY CZ DE DK EE ES FI FR GB GR HR HU IE IS IT LI LT LU LV MC MT NL NO PL PT RO SE SI SK TR

(43) Date of publication of application:
**10.02.2010 Bulletin 2010/06**

(73) Proprietors:
• **Vodafone Group PLC**
  **Newbury**
  **Berkshire RG14 2FN (GB)**
• **Vodafone España, S.A.**
  **28108 Alcobendas (ES)**

(72) Inventors:
• **Exadaktylos, Kyriakos**
  **28108 Alcobendas (Madrid) (ES)**
• **Diaz, Maria**
  **28108 Alcobendas (Madrid) (ES)**
• **Frost, Tim**
  **28108 Alcobendas (Madrid) (ES)**
• **Di Viesti, Pasquale**
  **28050 Madrid (ES)**

(74) Representative: **Ferrara, Simone et al**
**Vodafone Group Services Limited**
**Group Legal**
**Babbage House**
**The Connection**
**Newbury, Berkshire RG14 2FN (GB)**

(56) References cited:
**EP-A- 1 892 892**

• **PITSILLIDES ET AL: "MBMS Handover control: A new approach for efficient handover in MBMS enabled 3G cellular networks" COMPUTER NETWORKS, ELSEVIER SCIENCE PUBLISHERS B.V., AMSTERDAM, NL, vol. 51, no. 18, 30 October 2007 (2007-10-30), pages 4897-4918, XP022322478 ISSN: 1389-1286**
• **CHRISTOPHOROS CHRISTOPHOROU ET AL: "An enhanced approach for efficient MBMS handovers in 3G networks" COMPUTERS AND COMMUNICATIONS, 2008. ISCC 2008. IEEE SYMPOSIUM ON, IEEE, PISCATAWAY, NJ, USA, 6 July 2008 (2008-07-06), pages 362-367, XP031321400 ISBN: 978-1-4244-2702-4**
• **"Universal Mobile Telecommunications System (UMTS); User Equipment (UE) procedures in idle mode and procedures for cell reselection in connected mode (3GPP TS 25.304 version 7.6.0 Release 7); ETSI TS 125 304" ETSI STANDARD, EUROPEAN TELECOMMUNICATIONS STANDARDS INSTITUTE (ETSI), SOPHIA ANTIPOLIS CEDEX, FRANCE, vol. 3-R2, no. V7.6.0, 1 July 2008 (2008-07-01), XP014042112**

**Description**

**BACKGROUND OF THE INVENTION**

**Technical field**

The present invention relates to a method for cell re-selection of a mobile terminal in a cellular network providing a multicast service. The present invention furthermore relates to an apparatus for determining if cell re-selection is needed for a mobile terminal in a cellular network providing a multicast service and a cellular network providing a multicast service.

**Description of related art**

The Universal Mobile Telecommunications System (UMTS) standard defines a feature called Multimedia Broadcast & Multicast Service (MBMS). This feature allows the cellular network to send data in a point-to-multipoint fashion over the air interface to subscribers in the same cell that are interested to receive the service. Sending data in a point-to-multipoint fashion ensures that users requiring the same service will receive the content via the same data stream/channel, i.e. the channel is a point-to-multipoint (multicast) channel. This simultaneous reception by multiple subscribers means that the data does not have to be sent individually to each subscriber on a point-to-point channel. Hence, data transfer does not need to be duplicated and radio resources are conserved. The point-to-multipoint channel needs to cover the whole cell area. For this reason, relatively high transmission power has to be used on the channel, which increases the interference to other channels of the network. Therefore, if there are few or no users in a cell, it may be better not to use the point-to-multipoint channel at all, and instead use a point-to-point channel in the case where transmission is still needed. With the introduction of MBMS into the 3GPP UMTS Release 6 specifications, both point-to-point (PTP) and point-to-multipoint (PTM) transmissions are allowed for the transmission of an MBMS service over the air interface. This allows the cellular network to decide whether there are enough users in the cell interested in the MBMS service to warrant the establishment and use of PTM, or whether one or more PTP channels should be used. For a single user or a few users this is likely to be less power consuming due to the possibility for user-specific retransmissions. It is also possible that the network decides that nothing should be transmitted because there is no interest in the service.

A way to reduce the power of the PTM transmission is the use of the feature called "PTM soft combining". The basic concept is that when multiple contiguous cells on the same carrier frequency are all transmitting the same multicast service in a PTM fashion, the mobile terminal at the cell edge can receive the data streams from multiple cells, and combine them to enable a more reliable overall reception. This approach is intended to allow a decrease of the transmitted power for the PTM channel in each of the cells in the "soft-combining" group.

In cases where the soft-combining cell group does not cover the whole network, there are border areas where the mobile terminals within cells of the soft-combining group are not able to use soft combining, because their adjacent cells are not part of the soft combining cell group. In this case, if the power is reduced to the level required for mobile terminals to receive the required Quality of Service (QoS) assuming that soft combining is used, the mobile terminals at the edge of the soft combining area may not be able to receive the MBMS service correctly, and may have a higher block error rate than required.

There are existing approaches for controlling the provision of MBMS service on the PTM cell's coverage limit, such as the MBMS Handover Control described by Pitsillides et al. in "MBMS Handover control: A new approach for efficient handover in MBMS enabled 3G cellular networks" (COMPUTER NETWORKS, ELSEVIER SCIENCE PUBLISHERS B.V., vol. 51, no. 18, p.p. 4897-4918, October 2007). The MBMS service QoS is guaranteed by executing the handover (switching from a Dedicated Channel to Forward Access Channel and vice versa) on the PTM cell's coverage limit, having triggered this switching (handover) before the user enters said PTM cell's coverage limit in order to anticipate the Handover Delay. Thus, the handover trigger distance is determined by the coverage of the PTM cell (the guaranteed coverage of the Forward Access Channel) and the handover delay distance calculated with the estimated values of speed and direction of the user equipment (UE) and the handover delay time estimated by the radio network controller (RNC). Therefore, a previous and periodical calculation of all the aforementioned parameters is required.

Another current approach relates to a method for supporting MBMS service in Long Term Evolution (LTE) networks, disclosed in EP1892892. From an evolved NodeB (eNodeB, i.e., the base station of eUTRAN supporting LTE), pilot information, identifying the origin of the transmitted information, is sent through dedicated radio cells providing MBMS. The benefit of a specific pilot signal is that it is coverage limited and it does not need to be tuned up in terms of strength. However, if the base station has currently no users to serve, the typical use of MBMS service (with common pilots, which can be triggered on receiving the specific pilot signal) is required.

Therefore, it is an object of the invention to provide a solution that allows getting the power saving gains of soft combining even in the cells on the border of the soft combining cell group, whilst ensuring that the mobile terminals in these cells at the border of the soft combining area still receive the MBMS service correctly.

SUMMARY OF THE INVENTION

Thereto, according to the invention a method according to independent claim 1, an apparatus according to independent claim 9 and a cellular network according to independent claim 11 are provided. Favourable embodiments are defined in dependent claims 2-8, 10 and 12-13.

According to an aspect of the invention a method is provided for cell re-selection of a mobile terminal in a cellular network providing a multicast service. The cellular network comprises a first plurality of contiguous cells providing the multicast service on a point-to-multipoint channel, the soft-combining cell group. It furthermore comprises a second plurality of adjacent cells not being part of the soft combining cell group and providing the multicast service on a point-to-point channel. The second plurality of adjacent cells may belong to the same frequency layer as the first plurality of cells. When the mobile terminal is located in one of the cells of the soft-combining cell group and it is receiving the multicast service, it is determined in the following way if cell re-selection of the mobile terminal is needed. It is determined if the best intra-frequency neighbouring cell of the mobile terminal belongs to the soft combining cell-group or not. If the best intra-frequency neighbouring cell of the mobile terminal belongs to the soft-combining cell group, it is determined if cell re-selection of the mobile terminal is needed based on a first criterion. If the best intra-frequency neighbouring cell of the mobile terminal does not belong to the soft-combining cell group, it is determined if cell re-selection of the mobile terminal is needed based on a second criterion. The second criterion results in a higher probability of cell re-selection than the first criterion. The re-selection may be to a cell belonging to a different frequency layer as the soft-combining cell group.

As a result, cell re-selection out of the soft-combining cell group is more likely for mobile terminals that are located at the edge of the serving cell and close to a cell not in the soft-combining group, than for mobile terminals that are located at the edge of the serving cell close to a neighbouring cell that is in the soft-combining cell group. The first and the second criterion may be set by the operator of the cellular network and at least a part thereof may be signalled to the mobile terminal.

With the present invention the power-resource saving gains of soft-combining can be utilised in all cells of a soft combining area, independently of whether the cell is on the border thereof. Furthermore, reliable service provisioning of the multicast service will in general be improved, which means that there will be more resources available for customers requiring unicast services.

According to an embodiment of the invention, the first criterion and second criterion both are a cell ranking criterion, ranking cells of the cellular network for cell re-selection based on a ranking value, wherein the first criterion comprises an offset value for the concerned cell compared to the second criterion. This embodiment is advantageous, because it may be implemented by making only minor amendments to presently available procedures for cell re-selection.

According to a further embodiment of the invention, the step of determining if cell re-selection is needed is performed by the mobile terminal based on values of signals received from the cellular network and measured by the mobile terminal. Again, this embodiment is advantageous, because it may be implemented by making only minor amendments to presently available procedures for cell re-selection.

The best neighbouring cell may be determined in any suitable way. For example it may be determined based on at least a value of signals sent from the neighbouring cells to the mobile terminal or vice versa, such as the received power thereof or the received bit-error rate. Alternatively, the position of the mobile terminal is determined by a positioning system, such as GPS and the best neighbouring cell is determined based on the position of the mobile terminal. For example, the best neighbouring cell is taken to be the neighbouring cell closest to the position of the mobile terminal.

Preferably, the method according to the invention is implemented by means of a computer program.

According to a further aspect of the invention there is provided an apparatus for determining if cell re-selection is needed for a mobile terminal in a cellular network providing a multicast service, the cellular network comprising a first plurality of contiguous cells providing the multicast service on a point-to-multipoint channel and a second plurality of cells providing the multicast service on a point-to-point channel, the mobile terminal being located in one of the first plurality of cells and receiving the multicast service, the apparatus comprising:

- means for determining if the best intra-frequency neighbouring cell of the mobile terminal belongs to the first plurality or the second plurality of cells; and
- means for determining if cell selection of the mobile terminal is needed, the means being adapted for:

  - determining if the cell re-selection of the mobile terminal is needed based on a first criterion, if the best intra-frequency neighbouring cell of the mobile terminal belongs to the first plurality of cells; and
  - determining if cell re-selection of the mobile terminal is needed based on a second criterion, if the best intra-frequency neighbouring cell of the mobile terminal belongs to the second plurality of cells, the second criterion resulting in a higher probability of cell re-selection than the first criterion.

According to an embodiment of the invention the apparatus is part of a mobile terminal.

According to a still further aspect of the invention there is provided a cellular network comprising a first plurality of contiguous cells providing a multicast service on a point-to-multipoint channel and a second plurality of cells providing the multicast service on a point-to-point channel, the cellular network comprising means for signalling at least a part of a first criterion and a second criterion for cell re-selection to at least a mobile terminal located in one of the first plurality of cells and receiving the multicast service, wherein the first criterion is to be used for determining if cell re-selection of the mobile terminal is needed, if the best intra-frequency neighbouring cell of the mobile terminal belongs to the first plurality of cells; and wherein the second criterion is to be used for determining if cell re-selection of the mobile terminal is needed, if the best intra-frequency neighbouring cell of the mobile terminal belongs to the second plurality of cells, the second criterion resulting in a higher probability of cell re-selection than the first criterion.

These and other aspects of the invention will be apparent from and elucidated with reference to the embodiments described hereinafter.

## BRIEF DESCRIPTION OF THE DRAWINGS

The invention will be better understood and its numerous objects and advantages will become more apparent to those skilled in the art by reference to the following drawings, in conjunction with the accompanying specification, in which:

> Figure 1 shows a cellular network according to the prior art providing MBMS-service using PTM-channels in some cells and PTP channels in other cells.
> Figure 2 shows a soft combining cell group according to the prior art.
> Figure 3 shows a flowchart illustrating an embodiment of the invention.

Throughout the figures like reference numerals refer to like elements.

## DETAILED DESCRIPTION OF THE PRESENT INVENTION

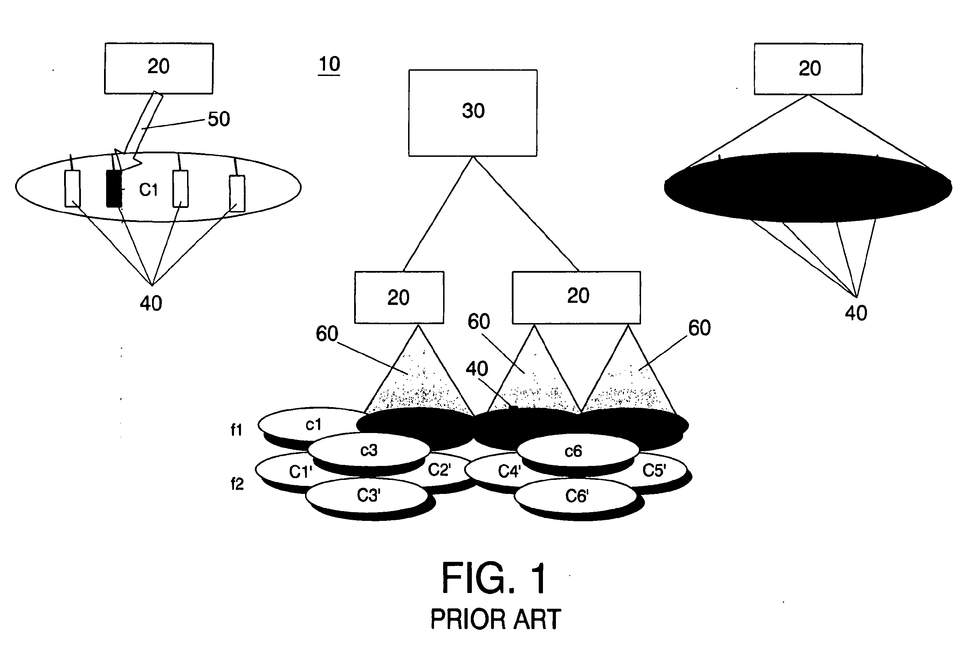

Figure 1 shows a cellular network 10 according to the UMTS-standard, comprising Nodes B 20 and a Radio Network Controller (RNC) 30. The cellular network provides Multimedia Broadcast & Multicast Service (MBMS) to mobile terminals 40. With the introduction of MBMS into the 3GPP UMTS Release 6 specifications, both point-to-point (PTP) and point-to-multipoint (PTM) transmissions are allowed for the transmission of an MBMS service over the air interface. So, as shown in figure 1, the cellular network may provide MBMS on frequency layer f1 (the MBMS preferred layer) using a Point-to-Point (PTP) channel 50 in cells (in the example of figure 1: c1, c3, c6) wherein only one or a few mobile terminals receive the MBMS service and using a Point-to-Multipoint (PTM) channel 60 in other cells (in the example of figure 1: c2, c4, c5). On the frequency layer f2, all cells (C1',C2',C3',C4',C5',C6') use PTP transmission.

The power of the PTM transmission may be reduced by a feature called "PTM soft combining". The basic concept is that when multiple contiguous cells on the same carrier frequency are all transmitting the same multicast service in a PTM fashion, the mobile terminal at the cell edge can receive the data streams from multiple cells, and combine them to enable a more reliable overall reception. This approach is intended to allow a decrease of the transmitted power for the PTM channel in each of the cells in the "soft-combining" group.

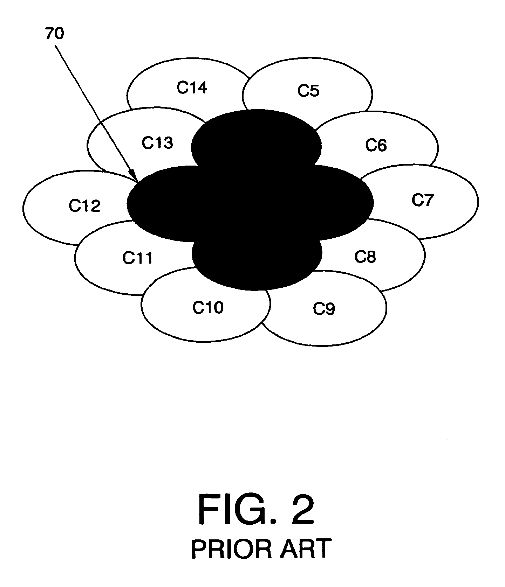

Figure 2 shows an example of this prior art feature, wherein the soft-combining cell group consists of the cells c1,c2,c3,c4, each of the cells providing the MBMS service on a PTM channel. The surrounding cells c5.... c14 provide the MBMS service on a PTP channel. So, in this example, the soft-combining cell group does not cover the whole network. As a result, there is a border 70 between the soft-combining cell group and the surrounding cells. In the areas near the border 70, the mobile terminals are not able to use soft combining, because the adjacent cells are not part of the soft combining cell group. If the power is reduced to the level required for mobile terminals to receive the required Quality of Service (QoS), assuming that soft combining can be used, the mobile terminals at the edge of the soft combining area may not be able to receive the MBMS service correctly, and may have a higher block error rate than required.

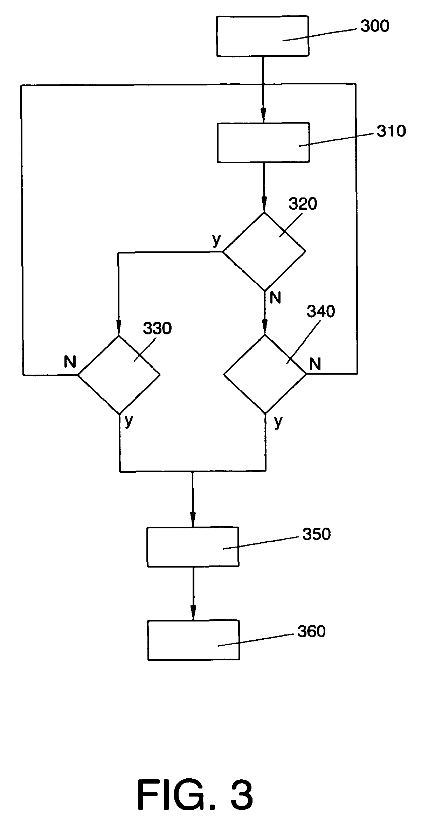

Figure 3 shows a flowchart of a method for determining if cell re-selection is needed for a mobile terminal according to an embodiment of the invention. The steps of the method are the following:

Step 300: START.

Step 310: Determine the best intra-frequency neighbouring cell of the mobile terminal. This step may be performed in any suitable way. For example, it may be determined by measuring the signal strength or error rate of signals sent from the intra-frequency neighbouring cells to the mobile terminal or vice versa. The neighbouring intra-frequency cell with the highest ranking "wins" and is considered to be the best neighbouring intra-frequency cell. Alternatively, first the position of the mobile terminal is determined by a positioning system, for example a GPS system located in the mobile terminal. The best neighbouring cell is the cell that is closest to the position of the mobile terminal.

Step 320: Determine if the best neighbouring intra-frequency cell belongs to the soft-combining cell group or not.

Step 330: If the best neighbouring intra-frequency cell belongs to the soft-combining cell-group, it is determined if cell re-selection is needed for the mobile terminal based on a first criterion.

Step 340: If the best neighbouring intra-frequency cell does not belong to the soft-combining cell-group, it is determined if cell re-selection is needed for the mobile terminal based on a second criterion. The second criterion results in a higher probability of cell re-selection for the mobile terminal than the first criterion.

Step 350: Performing cell re-selection for the mobile terminal to another frequency layer.

Step 360: END

The steps shown in the flowchart may preferably be performed by an apparatus that is located in the mobile terminal. However, the apparatus may also be located in the cellular network or it may be distributed over the mobile terminal and the cellular network.

A favourable embodiment of implementing the first and second criterion is now described. In the 3GPP Release 6 specifications, there is the possibility to apply an "MBMS offset" to the ranking of cells for cell re-selection. This parameter is signalled as the system information on the broadcast channel (BCH). The MBMS offset is only applied to those cells (serving or neighbouring) belonging to the MBMS Preferred Layer. As a result, it is more likely that a mobile station camps on one of the cells of the MBMS Preferred Layer. According to this known specification, the overall "reception quality" of the MBMS service is based on the reception quality of the downlink pilot channel, and in all border areas of a given cell the mobile terminal behaves in the same way. According to 3GPP TS 25.304 version 6.10.0 Release 6, section 5.2.6.1.4 the cell-ranking criterion R, for determining if cell re-selection is needed, is defined by:

$$R_s = Q_{meas,s} + Qhyst_s + Qoffmbms$$

$$R_n = Q_{meas,n} - Qoffset_{s,n} + Qoffmbms - TO_n * (1 - L_n)$$

wherein:

$R_s$ is the cell ranking criterion for the serving cell and $R_n$ is the cell ranking criterion for the neighbouring cells.

$Q_{meas}$ is the quality value of the received signal derived from the averaged CPICH (Common Pilot Channel) Ec/No or CPICH RSCP (Common Pilot Channel Received Signal Code Power) for FDD (Frequency Division Duplex) cells, from the averaged P-CCPCH RSCP (Primary Common Control Physical Channel Received Signal Code Power) for TDD (Time Division Duplex) cells and from the averaged received signal level for GSM cells.

$Qoffset_{s,n}$ specifies the offset between the two cells.

$Qhyst_s$ specifies the hysteresis value.

The signalled value $Qoffmbms$ is only applied to those cells (serving or neighbouring) belonging to the MBMS Preferred Layer.

$TO_n * (1-L_n)$ applies a temporary offset to the ranking criterion for the neighbouring cell.

These definitions are all well known to a person skilled in the art. However, for a more complete description thereof reference is made to 3GPP TS 25.304 version 6.10.0 Release 6, and in particular sections 5.2.6.1.4 and 5.2.6.1.5 thereof.

If the value $R_n$ of one of the neighbouring cells is larger than the value $R_s$ of the serving cell during a time interval, the mobile terminal re-selects to the neighbouring cell. The cell ranking criteria $R_s$ and $R_n$ together form a single criterion for determining if cell re-selection is needed or not.

According to 3GPP TS 25.304 version 6.10.0 Release 6, the parameter $Qoffmbms$, $Qoffset_{s,n}$ and $Qhyst_s$, are broadcast in system information.

According to an embodiment of the present invention the $Qoffmbms$ parameter is modified, such that its taken value depends on whether the best neighbour cell is a cell in the soft combining group or not..

Defining this new parameter as $Qoffmbms_{,best}$ neighbour, the cell ranking criterion is as follows:

$$R_s = Q_{meas,s} + Qhyst_s + Qoffmbms_{, best neighbour}$$

$$R_n = Q_{meas,n} - Qoffset_{s,n} + Qoffmbms_{best neighbour} - TO_n * (1 - L_n)$$

Now an example is given for suitable values of Qoffmbms,$_{best}$ neighbour. It is assumed that soft combining has a 3dB gain, and that the mobile terminal is in cell c4 as shown in figure 1, which belongs to the soft-combining cell group. Where cell c5, belonging to the soft-combining cell group is the best neighbour, a first (cell ranking) criterion is used for determining if cell re-selection is needed, wherein the value of Qoffmbms,$_{best}$ neighbour for example is 3dB and where cell c6 is the nearest neighbour a second (cell ranking) criterion is used, wherein the value for this parameter for example is OdB. Hence the mobile terminal is more likely to leave the soft-combining cell group and fallback to a cell with only PTP on the other frequency layer f2, when it is close to cell c6.

So, the cell ranking criterion used for determining if cell re-selection is needed for a mobile terminal depends on the best neighbouring cell for the mobile terminal.

The setting of the parameters is based on the network knowing which of the neighbour cells are in the soft combining group.

To solve potential problems, that could occur in case of a sudden change in the soft combining cell group in combination with a delay in the mobile terminal reading the updated parameter setting on the system information, it is advantageous to send the values for Qoffmbms, best neighbour on the MBMS control channel, or any other channel that allows the mobile terminal to quickly identify a change in the setting of this parameter.

While the invention has been illustrated and described in detail in the drawings and foregoing description, such illustration and description are to be considered illustrative or exemplary and not restrictive; the invention is not limited to the disclosed embodiments.

For example, the criteria used for determining if cell re-selection is needed are not necessarily based on the cell ranking criterion defined in 3GPP TS 25.304 version 6.10.0 Release 6, but may be any suitable criteria for determining if cell re-selection to another frequency layer is needed for a mobile terminal or not. In case that signal quality or strength values are used for determining the need of cell re-selection, the first and second criterion should essentially be as follows:

First criterion: the mobile terminal re-selects to a neighbouring cell if the following condition is fulfilled: Signal_neighbouring cell > Signal_current cell + offset1;

Second criterion: the mobile terminal re-selects to a neighbouring cell if the following condition is fulfilled Signal_neighbouring cell > Signal_current cell + offset2;

wherein offset1 > offset2.

It is possible that second criterions with different values for offset2 are used for different best neighbouring cells.

Furthermore, the invention may equally be applied to cellular networks working according to technologies other than UMTS, in which multicast services are implemented: including, for example, LTE (Long Term Evolution).

Other variations to the disclosed embodiments can be understood and effected by those skilled in the art in practising the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1.  Method for cell re-selection of a mobile terminal (40) in a cellular network (10) providing a multicast service, the cellular network comprising a first plurality of contiguous cells providing the multicast service on a point-to-multipoint channel and a second plurality of cells providing the multicast service on a point-to-point channel, the mobile terminal being located in one of the first plurality of cells and receiving the multicast service, the method comprising:

- determining (320) if the best neighbouring intra-frequency cell of the mobile terminal belongs to the first plurality or the second plurality of cells;

and the method being **characterised by** further comprising:

- determining (330) if cell re-selection of the mobile terminal is needed based on a first criterion, if the best neighbouring intra-frequency cell of the mobile terminal belongs to the first plurality of cells; and
- determining (340) if cell re-selection of the mobile terminal is needed based on a second criterion, if the best neighbouring intra-frequency cell of the mobile terminal belongs to the second plurality of cells, the second criterion resulting in a higher probability of cell re-selection than the first criterion.

2. Method according to claim 1 wherein the first plurality and the second plurality of cells belong to a same frequency layer.

3. Method according to claim 1 wherein the cell re-selection is to a cell belonging to a different frequency layer.

4. Method according to any one of claims 1-3 wherein the first criterion and second criterion are a cell ranking criterion, ranking cells of the cellular network for cell re-selection based on a ranking value, wherein the first criterion comprises an offset value for the concerned cell compared to the second criterion.

5. Method according to any of claims 1-4 wherein at least a part of the first and second criterion is signalled by the cellular network to the mobile terminal.

6. Method according to any of claims 1-5 wherein the step of determining if cell re-selection is needed is performed by the mobile terminal based on values of signals from the cellular network and measured by the mobile terminal.

7. Method according to any of claims 1-6 wherein the best neighbouring intra-frequency cell is determined based on at least a value of a signal sent from the best neighbouring cell to the mobile terminal or vice versa.

8. Method according to any of claims 1-6 wherein the position of the mobile terminal is determined by a positioning system and the best neighbouring intra-frequency cell is determined based on the position.

9. Apparatus for determining if cell re-selection is needed for a mobile terminal (40) in a cellular network (10) providing a multicast service, the cellular network comprising a first plurality of contiguous cells providing the multicast service on a point-to-multipoint channel and a second plurality of cells providing the multicast service on a point-to-point channel, the mobile terminal being located in one of the first plurality of cells and receiving the multicast service, the apparatus comprising:

- means for determining if the best neighbouring intra-frequency cell of the mobile terminal belongs to the first plurality or the second plurality of cells;

and the apparatus being **characterised by** further comprising:

- means for determining if cell selection of the mobile terminal is needed, the means being adapted for:

- determining if the cell re-selection of the mobile terminal is needed based on a first criterion, if the best neighbouring intra-frequency cell of the mobile terminal belongs to the first plurality of cells; and
- determining if cell re-selection of the mobile terminal is needed based on a second criterion, if the best neighbouring cell of the mobile terminal belongs to the second plurality of cells, the second criterion resulting in a higher probability of cell re-selection than the first criterion.

10. Mobile terminal (40) comprising the apparatus according to claim 9.

11. Cellular network (10) comprising a first plurality of contiguous cells providing a multicast service on a point-to-multipoint channel and a second plurality of cells providing the multicast service on a point-to-point channel, the cellular network **characterised by** comprising means for signalling a first criterion and a second criterion for cell re-selection to at least a mobile terminal (40) located in one of the first plurality of cells and receiving the multicast service, wherein the first criterion is to be used for determining if cell re-selection of the mobile terminal is needed, if the best neighbouring intra-frequency cell of the mobile terminal belongs to the first plurality of cells; and wherein the second criterion is to be used for determining if cell re-selection of the mobile terminal is needed, if the best neighbouring intra-frequency cell of the mobile terminal belongs to the second plurality of cells, the second criterion resulting in a higher probability of cell re-selection than the first criterion.

12. A computer program comprising computer program code means adapted to perform the steps of any one of claims 1 to 8, when said program is run on a computer.

13. Computer readable medium comprising the computer program of claim 12.

**Patentansprüche**

1. Verfahren zur Zellenneuwahl eines Mobilfunkendgeräts (40) in einem Funknetz (10), das einen Multicast-Dienst bietet, wobei das Funknetz eine erste Mehrzahl von aneinander grenzenden Zellen, die den Multicast-Dienst auf einem Punkt-zu-Mehrpunkt-Kanal bieten, und eine zweite Mehrzahl von Zellen beinhaltet, die den Multicast-Dienst auf einem Punkt-zu-Punkt-Kanal bieten, wobei sich das Mobilfunkendgerät in einer aus der ersten Mehrzahl von Zellen befindet und den Multicast-Dienst empfängt, wobei das Verfahren Folgendes beinhaltet:

   - Ermitteln (320), ob die beste benachbarte Intra-Frequenz-Zelle des Mobilfunkendgeräts zur ersten Mehrzahl oder zur zweiten Mehrzahl von Zellen gehört;

   und wobei das Verfahren **dadurch gekennzeichnet ist, dass** es ferner Folgendes beinhaltet:

   - Ermitteln (330), ob die Zellenneuwahl des Mobilfunkendgeräts nötig ist, auf der Basis eines ersten Kriteriums, ob die beste benachbarte Intra-Frequenz-Zelle des Mobilfunkendgeräts zur ersten Mehrzahl von Zellen gehört; und
   - Ermitteln (340), ob die Zellenneuwahl des Mobilfunkendgeräts nötig ist, auf der Basis eines zweiten Kriteriums, wenn die beste benachbarte Intra-Frequenz-Zelle des Mobilfunkendgeräts zur zweiten Mehrzahl von Zellen gehört, wobei das zweite Kriterium zu einer höheren Wahrscheinlichkeit einer Zellenneuwahl führt als das erste Kriterium.

2. Verfahren nach Anspruch 1, wobei die erste Mehrzahl und die zweite Mehrzahl von Zellen zu einer selben Frequenzschicht gehören.

3. Verfahren nach Anspruch 1, wobei die Zellenneuwahl für eine Zelle gilt, die zu einer anderen Frequenzschicht gehört.

4. Verfahren nach einem der Ansprüche 1-3, wobei das erste Kriterium und das zweite Kriterium ein Zellenrangkriterium sind, wobei das Einordnen der Zellen des Funknetzes in eine Rangfolge zur Zellenneuwahl auf einem Rangwert basiert, wobei das erste Kriterium einen Versatzwert für die betroffene Zelle im Vergleich zum zweiten Kriterium beinhaltet.

5. Verfahren nach einem der Ansprüche 1-4, wobei wenigstens ein Teil des ersten und zweiten Kriteriums durch das Funknetz an das Mobilfunkendgerät signalisiert wird.

6. Verfahren nach einem der Ansprüche 1-5, wobei der Schritt des Ermittelns, ob eine Zellenneuwahl erforderlich ist, von dem Mobilfunkendgerät auf der Basis von Werten von Signalen von dem Funknetz ausgeführt und von dem Mobilfunkendgerät gemessen wird.

7. Verfahren nach einem der Ansprüche 1-6, wobei die beste benachbarte Intra-Frequenz-Zelle auf der Basis von wenigstens einem Wert eines Signals ermittelt wird, das von der besten benachbarten Zelle zum Mobilfunkendgerät gesendet wird oder umgekehrt.

8. Verfahren nach einem der Ansprüche 1-6, wobei die Position des Mobilfunkendgeräts von einem Positionierungssystem ermittelt wird und die beste benachbarte Intra-Frequenz-Zelle auf der Basis der Position ermittelt wird.

9. Vorrichtung zum Ermitteln, ob eine Zellenneuwahl für ein Mobilfunkendgerät (40) in einem Funknetz (10) nötig ist, das einen Multicast-Dienst bietet, wobei das Funknetz eine erste Mehrzahl von aneinander grenzenden Zellen beinhaltet, die den Multicast-Dienst auf einem Punkt-zu-Mehrpunkt-Kanal bieten, und eine zweite Mehrzahl von Zellen, die den Multicast-Dienst auf einem Punkt-zu-Punkt-Kanal bieten, wobei sich das Mobilfunkendgerät in einer aus der ersten Mehrzahl von Zellen befindet und den Multicast-Dienst empfängt, wobei die Vorrichtung Folgendes umfasst:

- Mittel zum Ermitteln, ob die beste benachbarte Intra-Frequenz-Zelle des Mobilfunkendgeräts zur ersten Mehrzahl oder zur zweiten Mehrzahl von Zellen gehört;

und wobei die Vorrichtung **dadurch gekennzeichnet ist, dass** sie ferner Folgendes umfasst:

- Mittel zum Ermitteln, ob die Zellenwahl des Mobilfunkendgeräts benötigt wird, wobei das Mittel ausgelegt ist zum:

- Ermitteln, ob die Zellenneuwahl des Mobilfunkendgeräts nötig ist, auf der Basis eines ersten Kriteriums, wenn die beste benachbarte Intra-Frequenz-Zelle des Mobilfunkendgeräts zur ersten Mehrzahl von Zellen gehört; und
- Ermitteln, ob eine Zellenneuwahl des Mobilfunkendgeräts benötigt wird, auf der Basis eines zweiten Kriteriums, wenn die beste benachbarte Zelle des Mobilfunkendgeräts zur zweiten Mehrzahl von Zellen gehört, wobei das zweite Kriterium in einer höheren Wahrscheinlichkeit einer Zellenneuwahl resultiert als das erste Kriterium.

10. Mobilfunkendgerät (40), das die Vorrichtung nach Anspruch 9 umfasst.

11. Funknetz (10), das eine erste Mehrzahl von aneinander grenzenden Zellen umfasst, die einen Multicast-Dienst auf einem Punkt-zu-Mehrpunkt-Kanal bieten, und eine zweite Mehrzahl von Zellen, die den Multicast-Dienst auf einem Punkt-zu-Punkt-Kanal bieten, wobei das Funknetz **dadurch gekennzeichnet ist, dass** es Mittel zum Signalisieren eines ersten Kriteriums und eines zweiten Kriteriums für eine Zellenneuwahl zu wenigstens einem Mobilfunkendgerät (40) umfasst, das sich in einer aus der ersten Mehrzahl von Zellen befindet und den Multicast-Dienst empfängt, wobei das erste Kriterium zum Ermitteln zu verwenden ist, ob eine Zellenneuwahl des Mobilfunkendgeräts nötig ist, wenn die beste benachbarte Intra-Frequenz-Zelle des Mobilfunkendgeräts zur ersten Mehrzahl von Zellen gehört; und wobei das zweite Kriterium zum Ermitteln zu verwenden ist, ob eine Zellenneuwahl des Mobilfunkendgeräts nötig ist, wenn die beste benachbarte Intra-Frequenz-Zelle des Mobilfunkendgeräts zur zweiten Mehrzahl von Zellen gehört, wobei das zweite Kriterium zu einer höheren Wahrscheinlichkeit einer Zellenneuwahl führt als das erste Kriterium.

12. Computerprogramm, das Computerprogrammcode zum Ausführen der Schritte nach einem der Ansprüche 1 bis 8 umfasst, wenn das genannte Programm auf einem Computer abgearbeitet wird.

13. Computerlesbares Medium, das das Computerprogramm nach Anspruch 12 beinhaltet.

**Revendications**

1. Procédé de resélection de cellule d'un terminal mobile (40) dans un réseau cellulaire (10) procurant un service de multidiffusion, le réseau cellulaire comprenant une première pluralité de cellules contiguës procurant le service de multidiffusion sur un canal Point à Multipoints et une deuxième pluralité de cellules procurant le service de multidiffusion sur un canal Point à Point, le terminal mobile étant localisé dans une cellule de la première pluralité de cellules et recevant le service de multidiffusion, le procédé comprenant les opérations consistant à :

- déterminer (320) si la meilleure cellule intrafréquence voisine du terminal mobile appartient à la première pluralité ou à la deuxième pluralité de cellules ;

et le procédé étant **caractérisé par le fait qu'**il comprend en outre les opérations consistant à :

- déterminer (330) si une resélection de cellule du terminal mobile est nécessaire sur la base d'un premier critère, dans le cas où la meilleure cellule intrafréquence voisine du terminal mobile appartient à la première pluralité de cellules ; et
- déterminer (340) si une resélection de cellule du terminal mobile est nécessaire sur la base d'un deuxième critère, dans le cas où la meilleure cellule intrafréquence voisine du terminal mobile appartient à la deuxième pluralité de cellules, le deuxième critère résultant en une probabilité plus élevée d'une resélection de cellule que le premier critère.

2. Procédé selon la revendication 1, la première pluralité et la deuxième pluralité de cellules appartenant à une même couche de fréquence.

3. Procédé selon la revendication 1, la resélection de cellule se faisant vers une cellule qui appartient à une couche de fréquence différente.

4. Procédé selon l'une quelconque des revendications 1 à 3, le premier critère et le deuxième critère étant un critère de classement de cellules, lequel classe les cellules du réseau cellulaire pour une resélection de cellule sur la base d'une valeur de classement, cas dans lequel le premier critère comporte une valeur de compensation pour la cellule concernée en comparaison avec le deuxième critère.

5. Procédé selon l'une quelconque des revendications 1 à 4, au moins une partie du premier critère et du deuxième critère étant signalée au terminal mobile par le réseau cellulaire.

6. Procédé selon l'une quelconque des revendications 1 à 5, l'étape consistant à déterminer si une resélection de cellule est nécessaire étant effectuée par le terminal mobile sur la base des valeurs de signaux provenant du réseau cellulaire et mesurées par le terminal mobile.

7. Procédé selon l'une quelconque des revendications 1 à 6, la meilleure cellule intrafréquence voisine étant déterminée sur la base d'au moins une valeur d'un signal envoyé à partir de la meilleure cellule voisine vers le terminal mobile ou vice versa.

8. Procédé selon l'une quelconque des revendications 1 à 6, la position du terminal mobile étant déterminée par un système de positionnement et la meilleure cellule intrafréquence voisine étant déterminée sur la base de la position.

9. Appareil destiné à déterminer si une resélection de cellule est nécessaire pour un terminal mobile (40) dans un réseau cellulaire (10) procurant un service de multidiffusion, le réseau cellulaire comprenant une première pluralité de cellules contiguës procurant le service de multidiffusion sur un canal Point à Multipoints et une deuxième pluralité de cellules procurant le service de multidiffusion sur un canal Point à Point, le terminal mobile étant localisé dans une cellule de la première pluralité de cellules et recevant le service de multidiffusion, l'appareil comprenant :

 - des moyens pour déterminer si la meilleure cellule intrafréquence voisine du terminal mobile appartient à la première pluralité ou à la deuxième pluralité de cellules ;

et l'appareil étant **caractérisé par le fait qu'**il comprend en outre :

 - des moyens pour déterminer si une resélection de cellule du terminal mobile est nécessaire, les moyens étant conçus pour :
 - déterminer si la resélection de cellule du terminal mobile est nécessaire, sur la base d'un premier critère, dans le cas où la meilleure cellule intrafréquence voisine du terminal mobile appartient à la première pluralité de cellules ; et
 - déterminer si une resélection de cellule du terminal mobile est nécessaire, sur la base d'un deuxième critère, dans le cas où la meilleure cellule voisine du terminal mobile appartient à la deuxième pluralité de cellules, le deuxième critère résultant en une probabilité plus élevée d'une resélection de cellule que le premier critère.

10. Terminal mobile (40) comprenant l'appareil selon la revendication 9.

11. Réseau cellulaire (10) comprenant une première pluralité de cellules contiguës procurant un service de multidiffusion sur un canal Point à Multipoints et une deuxième pluralité de cellules procurant le service de multidiffusion sur un canal Point à Point, le réseau cellulaire étant **caractérisé par le fait qu'**il comprend des moyens pour signaler un premier critère et un deuxième critère pour une resélection de cellule à au moins un terminal mobile (40), lequel est localisé dans une cellule de la première pluralité de cellules et recevant le service de multidiffusion, cas dans lequel le premier critère est destiné à être utilisé pour déterminer si une resélection de cellule du terminal mobile est nécessaire, dans le cas où la meilleure cellule intrafréquence voisine du terminal mobile appartient à la première pluralité de cellules ; et cas dans lequel le deuxième critère est destiné à être utilisé pour déterminer si une resélection de cellule du terminal mobile est nécessaire, dans le cas où la meilleure cellule intrafréquence voisine du terminal mobile appartient à la deuxième pluralité de cellules, le deuxième critère résultant en une probabilité plus élevée d'une resélection de cellule que le premier critère.

12. Programme informatique comprenant des moyens à code-programme informatique conçus pour réaliser les étapes selon l'une quelconque des revendications 1 à 8, lorsque ledit programme est exploité sur un ordinateur.

13. Support lisible par ordinateur comprenant le programme informatique selon la revendication 12.

FIG. 1
PRIOR ART

# FIG. 2
## PRIOR ART

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 1892892 A

**Non-patent literature cited in the description**

• MBMS Handover control: A new approach for efficient handover in MBMS enabled 3G cellular networks. **PITSILLIDES et al.** COMPUTER NETWORKS. ELSEVIER SCIENCE PUBLISHERS B.V, October 2007, vol. 51, 4897-4918